(19) Europäisches Patentamt
European Patent Office
Office européen des brevets

(11) Veröffentlichungsnummer: **0 017 008**
**B1**

(12) # EUROPÄISCHE PATENTSCHRIFT

(45) Veröffentlichungstag der Patentschrift: **16.11.83**

(21) Anmeldenummer: **80101197.4**

(22) Anmeldetag: **10.03.80**

(51) Int. Cl.³: **C 08 G 79/04,**
C 08 G 65/32, C 07 F 9/40,
C 11 D 1/34

(54) **Oberflächenaktive Phosphonsäureester und diese enthaltende Polymerdispersionen und -emulsionen.**

(30) Priorität: **24.03.79 DE 2911696**
**24.03.79 DE 2911697**

(43) Veröffentlichungstag der Anmeldung:
**15.10.80 Patentblatt 80/21**

(45) Bekanntmachung des Hinweises auf die Patenterteilung:
**16.11.83 Patentblatt 83/46**

(84) Benannte Vertragsstaaten:
**AT BE CH DE FR GB IT NL SE**

(56) Entgegenhaltungen:
**FR - A - 2 197 044**

**CHEMICAL ABSTRACTS, Band 86, 1977, Zusammenfassung Nr. 92239m, Seite 154, Columbus, Ohio, US, S.N. AMINOV et al.: "Synthesis and surface-active properties of hydroxyethylated esters of alkylphosphonic acids"**

(73) Patentinhaber: **BAYER AG**
**Zentralbereich Patente, Marken und Lizenzen**
**D-5090 Leverkusen 1, Bayerwerk (DE)**

(72) Erfinder: **Walz, Klaus, Dr.**
**Domblick 4**
**D-5090 Leverkusen 31 (DE)**
Erfinder: **Nolte, Wilfried, Dr.**
**Gronenberg C 33**
**D-5090 Leverkusen (DE)**
Erfinder: **Müller, Friedhelm, Dr.**
**Zum Hahnenberg 62**
**D-5068 Odenthal (DE)**

(56) Entgegenhaltungen:
**Die Akte enthält technische Angaben, die nach dem Eingang der Anmeldung eingereicht wurden und die nicht in dieser Patentschrift enthalten sind.**

**EP 0 017 008 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

Oberflächenaktive Phosphonsäureester und diese enthaltende Polymerdispersionen und -emulsionen

Gegenstand der Erfindung sind oberflächenaktive Phosphonsäureester der allgemeinen Formel

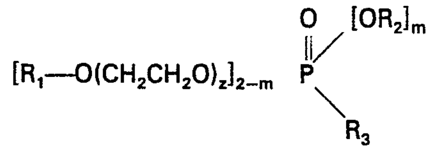

in der

$R_1$ für einen unsubstituierten, geradkettigen $C_8$—$C_{22}$-Alkyl-, Alkenyl- oder Acylrest steht,
$R_2$ für den Methyl- oder Ethylrest steht,
$R_3$ für einen $C_1$—$C_4$-Alkyl- oder Alkenylrest, der gegebenenfalls durch —OH, —$CONH_2$, —$COOC_1$—$C_4$-Alkyl oder Phenyl substituiert ist, insbesondere für den Methyl-, Ethyl- oder Benzylrest steht,
z eine ganze Zahl von 2—30, vorzugsweise von 6—12, bedeutet und
m für 0 oder 1 steht,

ihre Herstellung, ihre Verwendung als Emulgier- und Dispergiermittel sowie Wasser-in-Öl-(W/Ö)-Emulsionen und nichtwäßrige Dispersionen wasserlöslicher Polymerisate, die diese Phosphonsäureester enthalten.

Sie werden hergestellt, indem man Umesterungsprodukte aus 1 Mol eines Oxethylierungsproduktes von gegebenenfalls ungesättigen aliphatischen $C_8$—$C_{22}$-Alkoholen oder -Carbonsäuren und 0,5 bis 4 Mol Trimethyl- oder Triethylphosphit entweder mit $C_1$—$C_4$-Alkyl- oder Alkenylhalogeniden. Chloracetamid. Chloressigsäureestern, Chlorethanol oder Benzylchlorid umsetzt, oder vurzugsweise thermisch, gegebenenfalls unter Zusatz von Katalysatoren wie z.B. Methyljodid, in die entsprechenden Phosphonsäureester umlagert.

Die zur Herstellung der Phosphonsäureester eingesetzten Phosphorigsäureester lassen sich nach bekannten Verfahren herstellen. Beispielsweise können sie durch Umesterung von Phosphorigsäureestern niederer Alkohole mit Verbindungen der Formel

$$R_1—O(CH_2—CH_2O)_z—H$$

gegebenenfalls zusammen mit Glykolen der Formel

$$H—O(CH_2—CH_2—O)_z—H$$

wobei

$R_1$ und z die obengenannte Bedeutung besitzen,

hergestellt werden.

Die Umsetzung der Phosphorigsäureester mit den Alkylierungsmitteln kann in an sich bekannter Weise durchgeführt werden. Zweckmäßigerweise werden die Alkylierungsmittel bei Temperaturen von 50—200°C, vorzugsweise 100—160°C, in äquimolarer Menge zu den Phosphorigsäureestern zugegeben, wobei im Falle von Halogenverbindungen als Alkylierungsmittel das sich bildende niedere Alkylhalogenid kontinuierlich aus dem Reaktionsgemisch abdestilliert wird. Die Alkylierungsmittel können, insbesondere bei reaktionsträgen Vertretern, auch im Überschuß eingesetzt werden.

Bei einfachen Umlagerungen der Phosphorigsäureester ist es zweckmäßig, einen kleinen Teil des Esters, gegebenenfalls zusammen mit einem Katalysator, auf 120—200°C zu erhitzen, und den Rest des Esters dann bei dieser Temperatur langsam zuzugeben.

Für die Umsetzung müssen die Phosphorigsäureester nicht in reiner Form eingesetzt werden. Sie werden vorzugsweise in Form von Gemischen, wie sie bei der Umesterung mit niedrigen Trialkylphosphiten erhalten werden, eingesetzt. Je nach Molverhältnis von Oxethylierungsprodukt zu niedrigem Trialkylphosphit werden Produkte erhalten, die den Rest des Oxethylierungsproduktes ein- und zweimal enthalten können.

Die erfindungsgemäßen Verbindungen sind oberflächenaktiv und eignen sich für zahlreiche Anwendungszwecke, z.B. als Wasch-, Netz-, Färberei-, Emulgier- oder Dispergiermittel. Insbesondere eignen sich die Verbindungen als Netz-, Dispergier- und Emulgiermittel für Öl-Dispersionen von wasserlöslichen Polymeren. Unter Öl werden in diesem Zusammenhang allgemein hydrophobe organische Flüssigkeiten verstanden, wie Benzol. Toluol, Xylol, Dekalin, n- und iso-Paraffine, Mineralöle, Benzin oder deren Mischungen. Gegenstand der Erfindung ist daher auch die Verwendung der erfindungsgemäßen Phosphonsäureester als Netzmittel zur raschen Auflösung von z.B. in Form von Polymer/Öl-Dispersionen vorliegenden wasserlöslichen Polymeren in Wasser.

Nichtwäßrige Dispersionen wasserlöslicher Polymerisate sind an sich bekannt. Sie werden im allgemeinen hergestellt durch Polymerisation von wasserlöslichen Monomeren in einer W/Ö-Emulsion und anschließende Entfernung des Wassers, z.B. durch azeotrope Destillation, bis zu einem Restwassergehalt von weniger als 5 Gew.-%. Außer den bei der Polymerisation verwendeten Emulgatoren können solche Dispersionen zusätzlich geeignete Netzmittel enthalten, um bei der späteren Verwendung eine rasche Auflösung der Polymerisate in Wasser zu erreichen.

Die Herstellung und Verwendung derartiger Polymer/Öl-Dispersionen bzw. der entsprechenden polymerhaltigen W/Ö-Emulsionen werden z.B. in der DE—OS 2 354 006 und der DE—OS 2 419 764 beschrieben. Es handelt sich insbesondere um Dispersionen von Polyacrylamid und Acrylamid-Copolymeren, bei denen das Comonomere eine ionisch funktionelle Gruppe enthält, wie Acrylsäure oder Dimethylaminoethyl-methacrylat. Diese Polymeren werden hauptsächlich als Flockungsmittel, z.B. bei der Abwasseraufbereitung, sowie als Retentionsmittel in der Papier-industrie verwendet.

Bei der Anwendung wird die Polymer/Öl-Dispersion in Wasser eingerührt, um eine wäßrige Lösung des Polymeren zu erhalten. Häufig müssen dabei Netz- und Emulgiermittel zugesetzt werden, die das Öl im Wasser emulgieren und ein rasches Lösen des Polymeren ermöglichen. Als Emulgiermittel werden beispielsweise ethoxylierte Nonylphenole (DE—OS 2 419 764) oder ethoxylierte Fettalkohole (DE—OS 2 431 794) verwendet.

Bei der Herstellung der wäßrigen Lösung werden das Emulgiermittel und die Polymer/Öl-Dispersion dem Wasser zugegeben. Vorteilhafter und einfacher ist die Anwendung jedoch, wenn lediglich das Produkt eingesetzt werden muß, bei dem das Emulgiermittel der Dispersion bereits bei deren Herstellung zugefügt wird. Dabei werden aber meist instabile Dispersionen erhalten, da die zur Emulgierung von Öl in Wasser geeigneten Emulgatoren im allgemeinen nicht gut verträglich mit dem Öl sind. Dies gilt insbesondere für paraffinische Kohlenwasserstoffe.

Es wurde gefunden, daß Polymerdispersionen und -emulsionen, die die neuen oberflächenaktiven Phosphonsäureester enthalten, eine ausgezeichnete Stabilität besitzen und wesentliche Vorteile bei der obengenannten Anwendung aufweisen.

Gegenstand der Erfindung sind daher auch Polymer/Öl-Dispersionen und Wasser/Öl-Emulsionen von wasserlöslichen Polymerisaten, die als Emulgiermittel 4—12 Gew.-%, bezogen auf Polymere, eines erfindungsgemäßen Phosphonsäureesters enthalten.

Gegenstand der Erfindung ist außerdem die Verwendung der die Phosphonsäureester enthaltenden Polymeremulsionen und vorzugsweise der Polymerdispersionen zur Herstellung wäßriger Lösungen der darin enthaltenen Polymerisate. Dazu wird beispielsweise die stabile, lagerfähige Dispersion des Polymeren direkt oder zu einem späteren Zeitpunkt mit Wasser vermischt, wobei wäßrige Lösungen des Polymerisats gebildet werden.

Die in den erfindungsgemäßen Dispersionen und Emulsionen enthaltenen wasserlöslichen Polymerisate können nach bekannten Verfahren hergestellt werden, z.B. durch thermische Polymerisation in Emulsion unter Verwendung von Radikalinitiatoren. Vorzugsweise werden sie nach dem Verfahren der DE—OS 2 354 006 durch UV-Polymerisation von wasserlöslichen Monomeren in einer W/Ö-Emulsion hergestellt. Unter wasserlöslichen Monomeren werden solche Monomeren verstanden, von denen oder von deren Salzen sich zumindest 2 gew.-%ige Lösungen in Wasser bei 25°C herstellen lassen.

Als wasserlösliche Verbindungen seien beispielhaft genannt:

(A) Wasserlösliche Carbonsäuren mit 3—6, vorzugsweise 3—4 C-Atomen wie Acrylsäure, Methylacrylsäure, Crotonsäure, Maleinsäure, Itaconsäure, Citraconsäure, Aconitsäure bzw. die Alkali- und Ammoniumsalze der vorgenannten Säuren, vorzugsweise Acrylsäure, Methacrylsäure und Maleinsäure.

(B) Wasserlösliche Halbester aus Di- und Tricarbonsäuren mit 4—6 C-Atomen und einwertigen aliphatischen Alkoholen mit 1—8 C-Atomen oder deren Alkali- und Ammoniumsalzen, z.B. Maleinsäurehalbester oder deren Alkali- bzw. Ammoniumsalze.

(C) $\alpha,\beta$-monoolefinisch ungesättigte Sulfonsäuren wie Vinylsulfonsäure oder Styrolsulfonsäure.

(D) Wasserlösliche, primäre, sekundäre tertiäre Aminoalkylester der (Meth)Acrylsäure mit 2—4 C-Atomen in dem Alkylrest, beispielsweise, Dimethylaminoethyl(meth)acrylat, Diethylaminoethyl(meth)acrylat, Dimethylaminopropyl(meth)acrylat, Dimethylaminobutyl(meth)acrylat bzw. deren Salze mit anorganischen oder organischen Säuren wie Salzsäure, Essigsäure usw., vorzugsweise Dimethylaminoethyl(meth)acrylat.

(E) Methacrylamid, Acrylamid.

(F) Dialkylamino-alkyl(meth)acrylamide mit 1—2 C-Atomen in der Alkylamingruppe und 1—4 C-Atomen in der 2. Alkylgruppe bzw. deren Salze mit anorganischen oder organischen Säuren wie Salzsäure, Essigsäure usw., wie Dimethylaminomethyl(meth)acrylamid.

(G) N-Methylol(meth)acrylamid bzw. N-Alkoxymethyl(meth)acrylamide mit 1—2 C-Atomen in der Alkoxygruppe wie N-Methoxymethyl(meth)acrylamid

Vorzugsweise werden Monomere der Gruppen (A), (D), (E) und (F) oder deren Mischungen eingesetzt.

Eine besonders bevorzugte Monomermischung besteht aus 90—60 Gew.-% Acrylamid und 10—40 Gew.-% Dimethylaminoethylmethacrylat. In dem gleichen Verhältnis werden die Monomeren, statistisch verteilt, in das Copolymerisat eingebaut.

Die Monomeren bzw. deren Salze werden als 20 bis 80 gewichtsprozentige, vurzugsweise 50 bis 70 gewichtsprozentige, wäßrige Lösungen für die Polymerisation eingesetzt.

Als Ölphase kann jede Flüssigkeit dienen, welche die verwendeten Monomeren nicht löst und mit Wasser nicht mischbar ist. Vorzugsweise werden verwendet: Flüssige aliphatische und aromatische Kohlenwasserstoffe sowie deren Substitutionsprodukte und Gemische. Erwähnt seien: Benzol, Toluol, Xylol, Dekalin, Tetralin, Mineralöle, Kerosine, Petroleum, iso- und n-Paraffine, Benzin, Lackbenzin, Xylolgemische oder deren Mischungen.

Das Gewichtsverhältnis der Ölphase zur Monomer enthaltenden wäßrigen Phase kann je nach verwendeten Monomeren in weiten Grenzen variiert werden, vorzugsweise liegt es bei 3:1 bis 1:2,5.

Die Polymerkonzentrationen in der W/Ö-Emulsion kann im weiten Bereich schwanken. Üblicherweise beträgt der Polymergehalt in der anfallenden W/Ö-Emulsion 10—50 Gew.-%.

Die Entwässerung der W/Ö-Emulsionen zur Polymer/Öl-Dispersion erfolgt üblicherweise durch Zumischen von mit Wasser azeotrope Gemische bildender organischer Flüssigkeiten, wie Benzol, Toluol, Heptan etc., und nachfolgendem Erhitzen bis zum Siedepunkt. Bevorzugt dient die als Ölphase verwendete organische Flüssigkeit selbst als azeotropes Entwässerungsmittel. Das azeotrope Gemisch wird — gegebenenfalls bei vermindertem Druck — abdestilliert und trennt sich nach seiner Kondensation in eine wäßrige und eine organische Phase. Dieser Prozeß wird solange fortgesetzt, bis nahezu das gesamte Wasser aus dem Polymerisat entfernt worden ist. Die organische Phase kann auch kontinuierlich über einen Wasserabscheider in das Reaktionsgefäß zurückgeführt werden.

Die azeotrope Destillation erfolgt im allgemeinen bei Temperaturen unter 100°C, vorzugsweise bei 50—70°C, falls gewünscht unter vermindertem Druck.

Die lineraren Copolymerisate in den erfindungsgemäßen Dispersionen besitzen vorzugsweise durchschnittliche Molgewichte von mindestens 5.000.000.

Die erfindungsgemäßen Dispersionen, die unter 5 Gew.-%, bezogen auf Polymer, an Wasser enthalten, können zur Herstellung der wäßrigen Lösungen der Polymerisate am Ort ihrer Verwendung mit Wasser vermischt werden, wobei vorzugsweise die Dispersionen in Wasser eingetragen werden. Die wäßrigen Lösungen haben vorzugsweise Festgehalte von unter 5 Gew.-%. Streng genommen werden hierbei die Dispersionen in Öl-in-Wasser-Emulsionen überführt, obwohl sie optisch als klare Lösungen erscheinen. Für den Einsatz als Retentionsmittel und Entwässerungsbeschleuniger können die Polymerisatlösungen Feststoffgehalte von weit unter 1 Gew.-% haben.

Die Polymerkonzentration der Dispersionen kann in weitem Bereich schwanken. Üblicherweise liegt der Polymergehalt bei 10—50, vorzugsweise 30—50 Gew.-%, bezogen auf Polymerdispersion, und kann durch Abdestillieren weiterer Anteile der Ölphase beliebig gesteigert werden.

Die Polymerisate verbleiben in feinstverteilter Form, vorzugsweise mit einer mittleren Teilchengröße von 0,01—1 $\mu$ in der Dispersion und sind in dieser feinteiligen Form für die Herstellung wäßriger Polymerlösungen vorzugsweise als Retentionsmittel für Füllstoffe und Entwässerungsbeschleuniger bei der Papierherstellung, aber auch als Schlichtemittel für Textilien, Appretur- und Verdickungsmittel oder als Schutzkolloide vorzüglich geeignet.

Die Herstellung der erfindungsgemäßen, die neuen oberflächenaktiven Phosphonsäureester enthaltenden Wasser/Öl-Emulsionen und Polymer/Öl-Dispersionen kann nach verschiedenen, an sich bekannten Verfahren erfolgen. Beispielsweise kann die Emulsionspolymerisation der wasserlöslichen Monomeren unter Verwendung der Phosphonsäureester anstelle von bekannten Emulgatoren durchgeführt werden. Man erhält so direkt Emulsionen bzw. nach deren azeotroper Entwässerung Dispersionen gemäß vorliegender Erfindung. Selbstverständlich können die Dispersionen auch dadurch erhalten werden, daß man zunächst unter Verwendung bekannter Emulgatoren wie vorstehend beschrieben eine Wasser/Öl-Emulsion herstellt und diese dann vor oder nach der Entwässerung mit den Phosphonsäureestern versetzt. Schließlich kann die Polymer/Öl-Dispersion direkt aus den oben beschriebenen Komponenten hergestellt werden, indem man wasserlösliches Polymer und Phosphonsäureester in Öl dispergiert.

Die erfindungsgemäßen Dispersionen und Emulsionen besitzen folgende Vorteile:

Die zur Emulgierung von Öl in Wasser geeigneten Emulgatoren sind im allgemeinen nicht gut verträglich mit dem Öl. Das gilt insbesondere für paraffinische Kohlenwasserstoffe. Die neuen Phosphonsäureester sind dagegen hinreichend verträglich, so daß die benötigten Mengen sich auch in Dispersionen auf Basis paraffinischer Kohlenwasserstoffe verteilen lassen, ohne daß es zu den Abtrennungen kommt wie sie bei Emulgatoren vom Typ ethoxylierter Fettalkohole der Nonylphenole beobachtet werden.

In der Wirksamkeit sind due neuen Phosphonsäureester-Emulgatoren den bekannten ebenfalls überlegen. Geringe Mengen zeigen die gleiche emulgierende Wirkung, insbesondere, wenn die W/Ö-Emulsion, die zur Herstellung der Dispersion verwendet wird, auf den neuen Emulgator abgestimmt ist.

Weiterhin von Vorteil, besonders gegenüber den ethoxylierten Nonylphenolen, ist die

verhältnismäßig leichte biologische Abbaubarkeit der Phosphonsäureester. Bei der Anwendung in der Abwasseraufbereitung oder in der Papierindustrie gelangen sowohl das Öl als auch der Emulgator ins Abwasser, weshalb eine biologische Abbaubarkeit unbedingt erforderlich ist.

Aus diesem Grunde werden als Öle bevorzugt unverzweigte aliphatische Kohlenwasserstoffe eingesetzt, wodurch der Vorteil der besseren Verträglichkeit des Phosphonsäureester-Emulgators und die höhere Stabilität und Handhabbarkeit der erfindungsgemäßen Dispersionen besonders deutlich wird.

Die Erfindung wird im folgenden anhand von Beispielen erläutert. Die angegebenen Teile und Prozentwerte beziehen sich stets auf das Gewicht.

In den Beispielen 1 bis 7 wird die Herstellung der Phosphonsäureester beschrieben. Beispiel 8 demonstriert die bessere Stabilität und Wirksamkeit der erfindungsgemäßen Dispersionen. Dazu wird eine Polymer/Öl-Dispersion von kationischem Polyacrylamid hergestellt, mit Phosphonsäureester bzw. einem herkömmlichen Emulgator versetzt und nach dreitägiger Lagerung in Wasser eingerührt.

Beurteilt werden die Stabilität der Dispersion, die Geschwindigkeit der Verteilung in Wasser (Inversion) und die Verteilung in Wasser nach einigen Minuten.

Die resultierenden Lösungen werden einer Papierpulpe zugesetzt, an welcher anschließend eine Mahlgradbestimmung nach Schopper-Riegler durchgeführt wird.

Beispiel 1

48 Teile des nachstehend beschriebenen Phosphorigsäureesters werden mit 5 Teilen Methyljodid in einem mit einem Rückflußkühler und Rührer versehenen Kolben auf 150—160°C erhitzt. Bei dieser Temperatur läßt man dann weitere 430 Teile des Phosphorigsäureesters innerhalb von 1 Stunde zutropfen. Die Reaktions-mischung wird 1 Stunde bei 160—170°C nachgerührt und dann im Vakuum und flüchtigen Bestandteilen befreit. Es werden 465 Teile einer braungelben Flüssigkeit erhalten, die im wesentlichen aus dem Phosphonsäureester der Formel

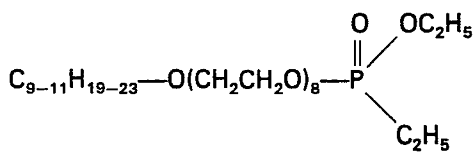

besteht. $n_D^{20}=1,4637$, P-Gehalt: ber: 4,93%
gef: 4,9%

Der verwendete Phosphorigsäureester wurde durch Umesterung von 266 Tln. Triethylphosphit mit 420 Teilen eines Umsetzungsproduktes von 1 Mol eines Gemisches aliphatischer $C_9$—$C_{11}$-Alkohole mit 8 Mol Ethylenoxid bei 160°C hergestellt. Das bei der Umesterung entstehende Ethanol wurde über eine kurze Kolonne abdestilliert. Überschüssiges Triethylphosphit wurde bei 150—160°C im Vakuum bis 1 Torr abdestilliert.

Beispiel 2

30 Teile des nachstehend beschriebenen Phosphorigsäureesters werden mit 1,5 Teilen Methyljodid vermischt und in einem mit einem Rückflußkühler und Rührer ausgestatteten Kolben auf 140—150°C erhitzt. Bei dieser Temperatur werden weitere 430 Teile des Phosphorigsäureesters innerhalb von 1 Stunde zugetropft. Der Ansatz wird noch 5 Stunden bei 150°C nachgerührt. Das Methyljodid und eventuelle weitere flüchtige Bestandteile werden durch kurzes Anlegen von Vakuum entfernt. Es werden 450 Teile des Phosphonsäureesters als rotbraune, wasserlösliche Flüssigkeit erhalten.

$n_D^{20}=1,4604$, P-Gehalt: ber. 2,8%
gef. 2,6%

Der verwendete Phosphorigsäureester, dem im wesentlichen die Struktur

$$[C_{11}H_{23}COO(CH_2CH_2O)_6]_2—P—OCH_3$$

zukommt, wurde durch Umesterung von 62 Teilen Trimethylphosphit mit 464 Teilen eines Additionsproduktes von 6 Mol Ethylenoxid an 1 Mol Laurinsäure bei 120 bis 140°C hergestellt, wobei 474 Teile des Phosphorigsäureesters erhalten wurden.

Beispiel 3

86 Teile des nachstehend beschriebenen Phosphorigsäureesters der Formel

$$[C_{18}H_{35}O(CH_2CH_2O)_6]_2—P—OC_2H_5$$

werden zusammen mit 5 Teilen Methyljodid in einem mit Rückflußkühler und Rührer versehenen Kolben auf 150—160°C erhitzt und dann innerhalb von 1 Stunde mit weiteren 450 Teilen des Phosphorigsäureesters versetzt. Die Reaktionsmischung wird 2 Stunden bei 170°C gerührt, wonach flüchtige Bestandteile im Vakuum entfernt werden. Es werden 535 Teile des Phosphonsäureesters als wasserlösliche, niedrigviskose Flüssigkeit erhalten.

$n_D^{20}$=1,4650, P-Gehalt: ber. 2,7%
gef. 2,4%

Der verwendete Phosphorigsäureester wurde erhalten, indem 83 Teile Triethylphosphit mit 532 Teilen eines Anlagerungsproduktes von 6 Mol Ethylenoxid an 1 Mol Oleylalkohol in Gegenwart von 2 Teilen Diethylphosphit bei 160—180°C umgesetzt wurden, wobei das gebildete Ethanol kontinuierlich aus dem Reaktionsgemisch abdestilliert wurde.

Beispiel 4

39 Teile des nachstehend beschriebenen Phosphorigsäureesters werden mit 1,5 Teilen Methyljodid versetzt und auf 150—160°C erhitzt. Bei dieser Temperatur läßt man innerhalb von 1 bis 2 Stunden weitere 360 Teile des Phosphorigsäureesters zutropfen. Die Reaktionsmischung wird dann 2 Stunden bei 170°C nachgerührt und anschließend bei dieser Temperatur im Vakuum von flüchtigen Bestandteilen befreit. Es werden 395 Teile einer braunen, wasserlöslichen Flüssigkeit erhalten, die zu einer blaßgelben Kristallmasse erstarrt, und die im wesentlichen aus der Verbindung der Formel

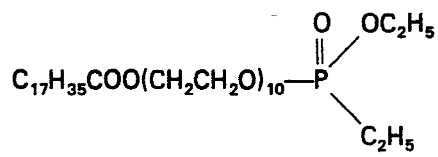

besteht. P-Gehalt: ber. 3,68%
gef. 3,6%

Trübungspunkt (1 %ige wäßrige Lösung): 58°C.

Der verwendete Phosphorigsäureester wurde erhalten, indem 166 Teile Triethylphosphit mit 362 Teilen eines Anlagerungsproduktes von 10 Mol Ethylenoxid an 1 Mol Stearinsäure bei 140—150°C umgesetzt wurden, wobei das gebildete Ethanol kontinuierlich aus dem Reaktionsgemisch abdestilliert wurde. Es wurden 400 Teile des Phosphorigsäureesters erhalten.

Beispiel 5

296 Teile des nachstehend beschriebenen Phosphorigsäureesters werden mit 3 Teilen Triphenylphosphin versetzt und auf 160—170°C erhitzt. Bei dieser Temperatur läßt mann innerhalb von 40 Minuten 50,6 Teile Benzylchlorid zutropfen, wobei das sich bildende Ethylchlorid über einen Rückflußkühler in eine Kühlfalle geleitet wird. Es wird 5 Stunden bei 170—190°C nachgerührt und nach dem Abkühlen auf 150°C bei einem Vakuum von 1 Torr das Produkt von flüchtigen Bestandteilen befreit. Es werden 313 Teile eines gelben, flüssigen Produktes erhalten, das im wesentlichen der Formel

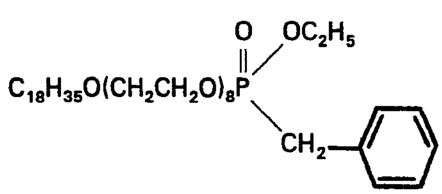

entspricht.

$n_D^{20}$=1,4815, P-Gehalt: ber. 3,86%
gef. 3,9%

Der verwendete Phosphorigsäureester wurde hergestellt, indem 249 Teile Triethylphosphit mit 465 Teilen eines Umsetzungsproduktes aus 1 Mol Octadecenylalkohol und 8 Mol Ethylenoxid in Gegenwart von 4 Teilen Diethylphosphit bei 160—170°C umgeestert wurden.

Beispiel 6

40 Teile des nachstehend beschriebenen Phosphorigsäureesters und 10 Teile Toluolsulfonsäuremethylester werden auf 180°C erhitzt und dann innerhalb von 1 Stunde mit weiteren 500 Teilen des

Phosphorigsäureesters versetzt. Der Ansatz wird 10 Stunden bei 180°C gerührt und dann bei einem Vakuum von 40—50 Torr von flüchtigen Bestandteilen befreit. Es werden 530 Teile einer gelben, wasserlöslichen Flüssigkeit erhalten, die im wesentlichen aus der Verbindung der Formel

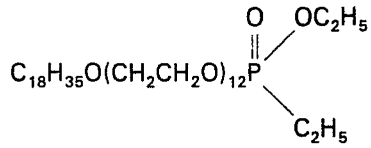

besteht.

$n_D^{20}=1,4639$, P-Gehalt: ber. 3,38%
gef. 3,4%

Der verwendete Phosphorigsäureester wurde durch Umesterung von Triethylphosphit mit einem Anlagerungsprodukt von 12 Mol Ethylenoxid an 1 Mol Oleylalkohol hergestellt. Hierzu wurde eine Mischung aus 557 Teilen des Ethylenoxidadduktes, 232 Teilen Triethylphosphit und 3 Teilen Diethylphosphit auf 145—150°C erhitzt. Das entstehende Ethanol wurde über eine kurze Kolonne abdestilliert. Überschüssiges Triethylphosphit wurde bei 145—150°C und einem Druck von ca. 2 Torr abdestilliert. Es wurden 611 Teile des Phosphorigsäureesters erhalten.

Beispiel 7

70 Teile des nachstehend beschriebenen Phosphorigsäureesters werden mit 2 Teilen Methyljodid versetzt und auf 160°C erhitzt. Bei dieser Temperatur läßt man weitere 600 Teile des Phosphorigsäureesters innerhalb von 30 Minuten zutropfen. Das Reaktionsgemisch wird 6 Stunden bei dieser Temperatur gehalten und dann im Vakuum von flüchtigen Anteilen befreit. Es werden 650 Teile eines gemischten Phosphonsäureesters als wasserlösliche, hellbraune, niedrigviskose Flüssigkeit erhalten.

$n_D^{20}=1,4597$, P-Gehalt: 3,6%
OH-Zahl: 35

Der verwendete Phosphorigsäureester wurde hergestellt, indem man 464 Teile eines Anlagerungsproduktes von 6 Mol Ethylenoxid an 1 Mol Laurinsäure, 185 Teile Octaethylenglykol und 124 Teile Trimethylphosphit bei 120—150°C umsetzte, wobei das entstandene Methanol über eine Kolonne abdestilliert wurde. Es wurden 683 Teile eines gemischten Phosphorigsäureesters erhalten.

Beispiel 8

Es werden zwei Polymer/Öl-Dispersionen untersucht, die auf 100 Tle. eines $C_{13}$—$C_{17}$-n-Paraffinöls 30 Tle. des schwefelsauren Salzes eines Copolymeren aus 80% Acrylamid und 20% Dimethylaminoethyl-methacrylat enthalten. Bedingt durch ihre Herstellung enthalten die Dispersionen noch etwa 1 Teil Wasser und, bezogen auf Copolymer, 3,6% Sorbitan-monooleat und 3,9% ethoxyliertes Sorbitan-hexaoleate (Dispersion 1) bzw. 7,5% Sorbitan-monooleat (Dispersion 2).

Durch Zugabe des gemäß Beispiel 1 hergestellten Phosphonsäureesters (Netzmittel A) werden daraus erfindungsgemäße Dispersionen hergestellt. Zum Vergleich werden Dispersionen mit den herkömmlichen Netzmitteln NP10 und L7 hergestellt.

Netzmittel A:

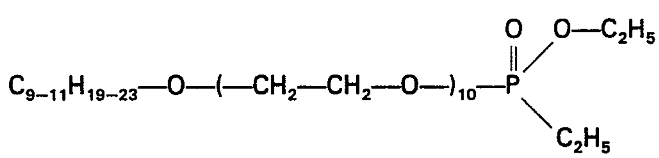

Netzmittel NP10:

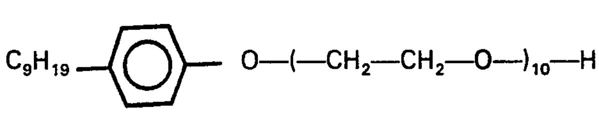

Netzmittel L7:

$$C_{12}H_{25}—O—(CH_2—CH_2—O—)_7—H$$

Beurteiling der Dispersionen

| Versuch | Netzmittel | Menge | Dispersion | Stabilität d. Dispers. | Inversion | Verteilung |
|---|---|---|---|---|---|---|
| 1 | A | 6% | 1 | gut | gut | gut |
| 2 | NP 10 | 6% | 1 | schlecht[1] | gut | mäßig |
| 3 | NP 10 | 10% | 1 | schlecht[2] | gut | gut |
| 4 | ohne | — | 1 | gut | schlecht | schlecht |
| 5 | A | 10% | 2 | mäßig[3] | gut | gut |
| 6 | NP 10 | 10% | 2 | schlecht[2] | gut | gut |
| 7 | L 7 | 10% | 2 | schlecht[2] | gut | gut |

[1]Emulgator setzt sich teilweise ab.
[2]Emulgator setzt sich ab; redispergierbarer Bodensatz aus Polymer.
[3]geringe Mengen Emulgator setzen sich ab.

Sollen die mit Netzmittel versetzten Dispersionen, deren Stabilität mit schlecht beurteilt wurde, angewendet werden, so ist eine vorherige gründliche mechanische Durchmischung zur Homogenisierung des Produktes unumgänglich.

Die Wirksamkeit der Produkte als Flockungs- oder Entwässerungshilfsmittel wird in erster Linie vom Polymer bestimmt. Eine an sich gute Wirksamkeit kann aber durch ungenügende Verteilung, d.h. durch ungenügende Emulgierung der Ölphase im Wasser, beeinträchtigt werden.

Einfluß des Netzmittels auf die Wirksamkeit

| Versuch | Netzmittel | Menge | Dispersion | Mahlgrad SR |
|---|---|---|---|---|
| 1 | A | 6% | 1 | 40 |
| 2 | NP 10 | 6% | 1 | 47 |
| 3 | NP 10 | 10% | 1 | 40 |
| Vergleich ohne Flockungsmittel | | | | 58 |

Ähnlich gute Ergebnisse wurden erhalten, wenn man Dispersionen verwendet, die anstelle des Netzmittels A Phosphonsäureester gemäß den Beispielen 2 bis 7 verwendet.

**Patentansprüche**

1. Oberflächenaktive Phosphonsäureester der allgemeinen Formel

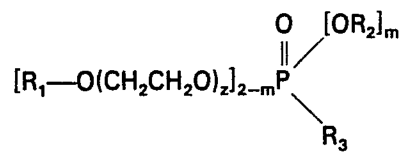

in der

$R_1$ für einen unsubstituierten, geradkettigen $C_8$—$C_{22}$-Alkyl-, Alkenyl- oder Acylrest steht,
$R_2$ für den Methyl- oder Ethylrest steht,
$R_3$ für einen $C_1$—$C_4$-Alkyl- oder Alkenylrest, der gegebenenfalls durch —OH, —$CONH_2$, —$COOC_1$—$C_4$-Alkyl oder Phenyl substituiert ist, steht,
z eine ganze Zahl von 2—30 bedeutet und
m für 0 oder 1 steht.

2. Oberflächenaktive Phosphonsäureester gemäß Anspruch 1, dadurch gekennzeichnet, daß $R_3$ für den Methyl-, Ethyl- oder Benzylrest steht und z eine ganze Zahl von 6—12 bedeutet.

3. Verfahren zur Herstellung von oberflächenaktiven Phosphonsäureestern gemäß Anspruch 1, dadurch gekennzeichnet, daß man Phosphorigsäureester der Formel

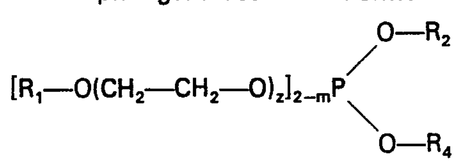

in der

$R_1$, $R_2$, z und m die in Anspruch 1 genannte Bedeutung besitzen und
$R_4$ für einen $C_1$—$C_4$-Alkylrest steht,

mit $C_1$—$C_4$-Alkyl- oder Alkenylhalogeniden, Chloracetamid, Chloressigsäureestern, Chlorethanol oder Benzylchlorid umsetzt, oder, gegebenenfalls in Gegenwart von Katalysatoren, in die entsprechende Phosphonsäureester umlagert.

4. Verfahren gemäß Anspruch 3, dadurch gekennzeichnet, daß man als Phosphorigsäureester Umsetzungsprodukte aus 1 Mol eines Oxethylierungsproduktes von gegebenenfalls ungesättigten aliphatischen $C_8$—$C_{22}$-Alkoholen oder $C_8$—$C_{22}$-Carbonsäuren und 0,5 bis 4 Mol Trimethyl- oder Triethylphosphit einsetzt.

5. Verwendung der Verbindungen gemäß Ansprüchen 1 und 2 als Emulgier- oder Dispergiermittel oder als Netzmittel zur raschen Auflösung wasserlöslicher Polymerer in Wasser.

6. Polymer/Öl-Dispersionen und Wasser/Öl-Emulsionen von wasserlöslichen Polymerisaten, enthaltend als Emulgier- oder Netzmittel 4—12 Gew.-%, bezogen auf Polymere, eines Phosphonsäureesters gemäß Ansprüchen 1 und 2.

7. Polymer/Öl-Dispersionen gemäß Anspruch 6, enthaltend ein Copolymer aus Acrylamid und Dimethylaminoethylmethacrylat sowie ein n-Paraffin als Ölphase.

8. Verwendung der Dispersionen oder Emulsionen gemäß Anspruch 6 und 7 als Flockungs- und Retentionsmittel.

**Revendications**

1. Esters d'acide phosphonique tensio-actifs de formule générale

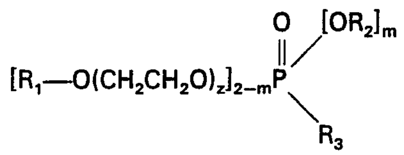

dans laquelle

$R_1$ est un reste alkyle, alcényle ou acyle en $C_8$ à $C_{22}$ non substitué à chaîne droite,
$R_2$ est le reste méthyle ou éthyle,
$R_3$ est un reste alkyle ou alcényle en $C_1$ à $C_4$ qui est éventuellement substitué par un radial —OH, —$CONH_2$, —COO-alkyle en $C_1$ à $C_4$ ou phényle,
z est un nombre entier de 2 à 30 et
m est égal à 0 ou à 1.

2. Esters d'acide phosphonique tensio-actifs suivant la revendication 1, caractérisés en ce que $R_3$ est le reste méthyle, éthyle ou benzyle et z est un nombre entier égal à 6—12.

3. Procédé de production d'esters d'acide phosphonique tensio-actifs suivant la revendication 1, caractérisé en ce qu'on fait réagir un ester d'acide phosphoreux de formule

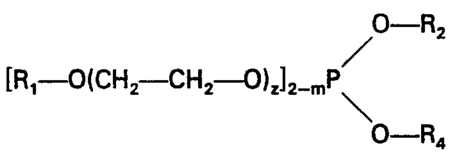

dans laquelle

$R_1$, $R_2$, z et m ont la définition indiquée dans la revendication 1 et
$R_4$ est un reste alkyle en $C_1$ à $C_4$,

avec des halogénures d'alkyle ou d'alcényle en $C_1$—$C_4$, le chloracétamide, des esters d'acide chloracétique, le chloréthanol ou le chlorure de benzyle, ou bien on les transpose en les esters d'acide phosphonique correspondants, le cas échéant en présence de catalyseurs.

4. Procédé suivant la revendication 3, caractérisé en ce qu'on utilise comme esters d'acide phosphoreux des produits de réaction d'une mole d'un produit d'oxéthylation d'alcools en $C_8$ à $C_{22}$ ou d'acides carboxyliques en $C_8$ à $C_{22}$ aliphatiques éventuellement insaturés et 0,5 à 4 moles de phosphite de triméthyle ou de triéthyle.

5. Utilisation des composés suivant les revendications 1 et 2 comme émulsionnants ou dispersants ou comme agents mouillants pour dissoudre rapidement dans l'eau des polymères hydrosolubles.

6. Dispersions polymère/huile et émulsions eau/huile de polymères solubles dans l'eau, contenant comme émulsionnant ou agent mouillant 4 à 12% en poids, par rapport aux polymères, d'un ester d'acide phosphonique suivant les revendications 1 et 2.

7. Dispersions polymère/huile suivant la revendication 6, contenant un copolymère d'acrylamide et de méthacrylate de diméthylaminoéthyle ainsi qu'une n-paraffine comme phase d'huile.

8. Utilisation des dispersions ou émulsions suivant les revendications 6 et 7 comme agents floculants et agents de rétention.

## Claims

1. Surface-active phosphonic acid esters of the general formula

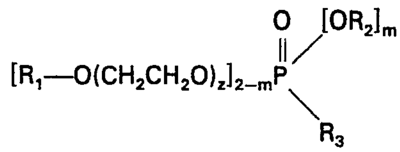

in which

$R_1$ represents an unsubstituted, straight-chain $C_8$—$C_{22}$ alkyl, alkenyl or acyl radical,
$R_2$ represents the methyl or ethyl radical,
$R_3$ represents a $C_1$—$C_4$ alkyl or alkenyl radical which is optionally substituted by —OH, —$CONH_2$, —$COOC_1$—$C_4$ alkyl or phenyl,
z denotes an integer from 2—30, and
m represents 0 or 1.

2. Surface-active phosphonic acid esters according to Claim 1, characterised in that $R_3$ represents the methyl, ethyl or benzyl radical and z denotes an integer from 6—12.

3. Process for the production of surface-active phosphonic acid esters according to Claim 1, characterised in that phosphorous acid esters of the formula

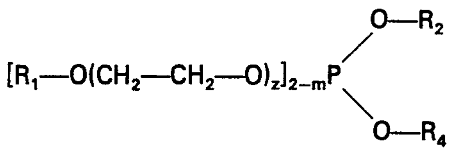

in which

$R_1$, $R_2$, z and m have the meaning indicated in Claim 1, and
$R_1$ represents a $C_1$—$C_4$ alkyl radical,

are reacted with $C_1$—$C_4$ alkyl or alkenyl halides, chloroacetamide, chloroacetic acid esters, chloroethanol or benzyl chloride, or are rearranged into the corresponding phosphonic acid esters, optionally in the presence of catalysts.

4. Process according to Claim 3, characterised in that the phosphorous acid esters used are reaction products of 1 mole of an ethoxylation product of optionally unsaturated aliphatic $C_8$—$C_{22}$ alcohols or $C_8$—$C_{22}$ carboxylic acids and 0.5 to 4 moles of trimethyl or triethyl phosphite.

5. Use of the compounds according to Claims 1 and 2 as emulsifiers or dispersants or as wetting agents for rapidly dissolving water-soluble polymers in water.

6. Polymer/oil dispersions and water/oil emulsions of water-soluble polymers, containing as the emulsifier or wetting agent 4—12% by weight, based on the weight of the polymer, of a phosphonic acid ester according to Claims 1 and 2.

7. Polymer/oil dispersions according to Claim 6, containing a copolymer of acrylamide and dimethylaminoethyl methacrylate and an n-paraffin as the oil phase.

8. Use of the dispersions or emulsions according to Claim 6 and 7 as flocculating agents and retention agents.